# EUROPÄISCHE PATENTANMELDUNG

(11) **EP 3 534 282 A1**
(43) Veröffentlichungstag der Anmeldung: **04.09.2019**
(21) Anmeldenummer: 18159485.4
(22) Anmeldetag: 01.03.2018
(51) Int. Cl.: G06F 21/44, G06F 21/51

(54) **VERFAHREN UND SICHERHEITSMODUL ZUM RECHNERGESTÜTZTEN AUSFÜHREN VON PROGRAMMCODE**

(71) Anmelder: Siemens Aktiengesellschaft, 80333 München (DE)
(72) Erfinder: Aschauer, Dr. Hans, 81829 München (DE); Falk, Dr. Rainer, 85586 Poing (DE); Feist, Christian Peter, 80689 München (DE); Pfau, Axel, 80333 München (DE); Schneider, Daniel, 80796 München (DE)

(57) **Zusammenfassung**

Die Erfindung betrifft ein Sicherheitsmodul, das eine geschützte Ausführungsumgebung bereitstellt, um Programmcode möglichst sicher auszuführen. Das Sicherheitsmodul ist vorzugsweise individuell für seinen Einsetzzweck konfigurierbar.

## Beschreibung

Die Erfindung bezieht sich auf ein Verfahren und ein Sicherheitsmodul zum rechnergestützten Ausführen von Programmcode.

Hardware Security Module (HSM) (oder insbesondere auch Sicherheitsmodule genannt) sind spezielle Computersysteme, welche kryptographische Operationen in einer sicheren Umgebung durchführen und geheime Schlüssel sicher speichern können. Insbesondere besteht ein Bedarf an Sicherheitsmodulen, die vorzugsweise flexibler als konventionelle Sicherheitsmodule eingesetzt werden können.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, das Dokument EP 3028140 B1, das Dokument EP 17175275 und das Dokument US 8 843 761 B2 bekannt.

Eine Aufgabe der vorliegenden Erfindung ist es, ein Verfahren und ein Sicherheitsmodul bereitzustellen, die flexibler eingesetzt werden können als die aus dem Stand der Technik bekannten Sicherheitsmodule.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein erster Aspekt der Erfindung betrifft ein Sicherheitsmodul aufweisend:
- eine erste Schnittstelle zum Empfangen von einem Programmcode wobei,
   - dem Programmcode Ausführungsanforderungen zugeordnet sind;
- eine erste Speichereinheit mit einer Ausführungsumgebung;
- ein konfigurierbarer Prozessor zur Ausführung des Programmcodes umfassend,
   - eine Ausführungseinheit, wobei
      - die Ausführungsanforderungen festlegen, ob der Programmcode durch den konfigurierbaren Prozessor ausgeführt werden darf,
      - die Ausführungseinheit den Programmcode anhand der Ausführungsanforderungen mittels der Ausführungsumgebung ausführt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-ComputerSysteme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger oder z. B. ein wechselbares Speichermodul verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion gebildet oder berechnet werden. Weiterhin kann darunter insbesondere auch eine digitale Signatur oder ein kryptographischer Nachrichtenauthentisierungscode verstanden werden.

Unter "extern" kann im Zusammenhang mit der Erfindung beispielsweise verstanden werden, dass z. B. eine Komponente (z. B. Modul oder Einheit) kein integraler Bestandteil einer anderen entsprechenden Komponente ist. Ist etwas beispielsweise extern von einem Prozessor, so ist diese entsprechende Komponente kein integraler Bestandteil des Prozessors.

Unter "Ausführungsanforderungen" können im Zusammenhang mit der Erfindung beispielsweise Sicherheitsanforderungen an die Ausführungsumgebung verstanden werden. Beispielsweise kann gefordert sein, dass die Ausführungsumgebung elektromagnetisch abgeschirmt ist, um z. B. Seitenkanalangriffe zu erschweren. Zusätzlich oder alternativ können auch kryptographische Anforderungen gefordert sein, die z. B. fordern, dass Daten für die Ausführung des Programmcodes in einem verschlüsselten Zustand vorliegen.

Unter "konfigurierbaren Prozessor" können im Zusammenhang mit der Erfindung beispielsweise ein Prozessor, der z. B. als Soft-CPU realisiert ist, verstanden werden. Dieser Prozessor kann beispielsweise unter Verwendung von gängigen Ressourcen (Lookup-Tables, Flip-Flops) in einem FPGA realisiert werden. Ein solcher konfigurierbarer Prozessor hat beispielsweise gegenüber einer üblichen Hard-CPU zwar eine geringere Leistung, lässt sich insbesondere jedoch leicht modifizieren und sich je nach Bedarf konfigurieren. Häufig sind z. B. in eingebetteten Systemen bereits FPGAs für eine Vielzahl von Anwendungen vorhanden. Vorhandene FPGA-Ressourcen können beispielsweise somit für die Realisierung des Sicherheitsmoduls mitverwendet werden. Das Sicherheitsmodul kann somit beispielsweise parallel zu anderen FPGA-Modulen auf dem gleichen FPGA-Baustein implementiert sein, ohne dass z. B. sich diese gegenseitig beeinflussen. Ebenfalls lassen sich beispielsweise mehrere Soft-CPUs und somit mehrere Sicherheitsmodule auf einem einzigen FPGA realisieren. Dies ist beispielsweise vorteilhaft, wenn mehreren Mandanten oder unabhängige Teilnehmern jeweils ein Sicherheitsmodul bereitgestellt werden soll. Weiterhin kann ein Sicherheitsmodul beispielsweise auf unterschiedlichen FPGA-Hardware-Plattformen realisiert werden. Ein zusätzlicher Chip für die Realisierung des Sicherheitsmoduls ist somit insbesondere nicht erforderlich. Beispiele für verfügbare Soft-CPUs/konfigurierbare Prozessoren sind Nios II von Altera und Microblaze von Xilinx. Eine Soft-CPU/konfigurierbare Prozessor kann insbesondere so konfiguriert werden, dass die Ausführungsumgebung auf dieser, z. B. der Ausführungseinheit, laufen kann. Ausführungsumgebung kann z. B. ein vollständiges Betriebssystem wie z. B. Linux sein.

Die Erfindung ist insbesondere dahingehend vorteilhaft, um ein flexible nutzbares Sicherheitsmodul ("open HSM") zu realisieren, das unterschiedliche Anwendungsprogramme laden und sicher ausführen kann. Das Sicherheitsmodul erlaubt insbesondere, dass Programmcode, z. B. Applikationscode, in einer speziell gehärteten und isolierten Umgebung ausgeführt werden kann. Das flexibel nutzbare Sicherheitsmodul lässt sich beispielsweise als eigenständiger Linux Rechner realisieren, welcher über eine serielle Schnittstelle, z. B. RS232, SPI oder I2C, an das Hauptsystem angebunden ist. Das Sicherheitsmodul lässt sich vorzugsweise dabei über diese Schnittstelle mit fest definierten Kommandos konfigurieren und versiegeln. In einem versiegelten Zustand ist das Sicherheitsmodul vorzugsweise nicht mehr programmierbar bzw. die aktuelle Programmierung nicht modifizierbar, und es wird nur noch ein eingeschränkter Satz an Kommandos für die Kommunikation zugelassen. Die Schnittstelle zwischen dem Sicherheitsmodul und dem Hauptsystem, z. B. ein Prozessor oder eine Workstation, ist dabei vorzugsweise unverschlüsselt. Ein Einsatz von seriellen Schnittstellen kann dabei beispielsweise die Sicherheit zusätzlich erhöhen. Die Erfindung realisiert insbesondere eine offene sichere Ausführungsumgebung, die auf unterschiedlichen Geräteplattformen realisiert werden kann.

Das Sicherheitsmodul kann beispielsweise mittels des konfigurierbaren Prozessors realisiert werden, der vorzugsweise die Geräteplattform bildet. Der konfigurierbare Prozessor kann dabei eine Soft-CPU (soft microprocessor) auf einem Field Programmable Gate Array (FPGA) oder auch auf einem Application-specific Integrated Circuit (ASIC) sein.

Mit der Erfindung ist es beispielsweise möglich, ein frei programmierbares und versiegelbares Sicherheitsmodul mittels eines konfigurierbaren Prozessors, z. B. auf einer Soft-CPU in einem FPGA oder auch einem ASIC, zu implementieren.

Da insbesondere in eingebetteten Systemen bereits häufig FPGAs für unterschiedliche Anwendungen verwendet werden, können auf diesen FPGAs verfügbare Ressourcen für die Implementierung des Sicherheitsmoduls mitverwendet werden. Es muss somit insbesondere kein zusätzlicher Chip, auf welchem das Sicherheitsmodul implementiert ist, verbaut und in das System eingebunden werden. Weil vorzugsweise kein zusätzlicher Chip benötigt wird, sinkt einerseits die Abhängigkeit von Lieferanten für diesen Chip und die Kosten für die Lösung werden nicht erhöht.

Weiterhin weist insbesondere die Realisierung eine hohe Vertrauenswürdigkeit auf, da im Gegensatz zu bekannten Sicherheitsmodulen keine Hardware-CPUs eines Chiplieferanten verwendet werden, die einen Hardware-Trojaner aufweisen könnten. Dadurch kann beispielsweise ein Container in Form von Programmcode auf einer geschützten Ausführungsplattform besonders sicher ausgeführt werden.

Bei einer ersten Ausführungsform des Sicherheitsmoduls umfasst das Sicherheitsmodul eine Konfigurationseinheit zum Konfigurieren des konfigurierbaren Prozessors. Die Konfigurationseinheit kann insbesondere den konfigurierbaren Prozessor anhand der Ausführungsanforderungen konfigurieren. Insbesondere kann die Konfigurationseinheit den konfigurierbare Prozessor anhand der Ausführungsanforderungen individuell für den Programmcode konfigurieren.

Das Sicherheitsmodul ist dahingehend vorteilhaft, um den konfigurierbaren Prozessor für bestimmte Aufgaben oder Anforderungen zu konfigurieren.

Das Sicherheitsmodul ist zudem dahingehend vorteilhaft, um spezifisch für den Programmcode den konfigurierbaren Prozessor einzurichten. Dabei können vorzugsweise automatisch die Ausführungsanforderungen ausgelesen werden und anhand der Ausführungsanforderungen der konfigurierbare Prozessor individuell konfiguriert werden.

Bei einer weiteren Ausführungsform des Sicherheitsmoduls konfiguriert die Konfigurationseinheit den konfigurierbaren Prozessor nach erfolgreicher Authentifizierung.

Das Sicherheitsmodul ist dahingehend vorteilhaft, um eine Konfiguration des konfigurierbaren Prozessors nur durch Berechtigte zu erlauben, die erfolgreich authentifiziert werden können. Das kann beispielsweise eine Person sein, die sich über ein Passwort authentisiert und vom Sicherheitsmodul authentifiziert wird. Alternativ oder zusätzlich kann der Programmcode z. B. digital signiert oder mittels einer Prüfsumme kryptographisch geschützt sein. Dies wird dann z. B. durch die Konfigurationseinheit überprüft, ob die digitale Signatur von einem Berechtigten erstellt wurde. Konnte die digitale Signatur z. B. erfolgreich authentifiziert werden, wird eine Konfiguration des konfigurierbaren Prozessors vorgenommen. Ist die Authentifizierung nicht erfolgreich, wird der konfigurierbare Prozessor vorzugsweise nicht konfiguriert. Zusätzlich kann beispielsweise ein Steuersignal bereitgestellt werden. Beispielsweise kann mittels des Steuersignals der Person, die den Programmcode ausführen wollte, angezeigt werden, dass die Authentifizierung fehlgeschlagen ist. Alternativ kann das Steuersignal z. B. ein Alarmsignal steuern, die bei einer nicht erfolgreichen Authentifizierung das Sicherheitsmodul in einen gesicherten Zustand versetzt.

Bei einer weiteren Ausführungsform des Sicherheitsmoduls wird die Ausführungseinheit anhand der Ausführungsanforderungen überprüft, ob der Programmcode ausgeführt werden kann.

Das Sicherheitsmodul ist dahingehend vorteilhaft, um sicherzustellen, dass der Programmcode vollständig ausführbar ist. Wird beispielsweise festgestellt, dass der Programmcode nicht ausführbar ist, kann dies z. B. über ein Steuersignal vorzugsweise der Person, die den Programmcode ausführen wollte, angezeigt werden. Alternativ kann das Steuersignal z. B. ein Alarmsignal steuern, das bei einem unsicheren Programmcode das Sicherheitsmodul in einen gesicherten Zustand versetzt.

Bei einer weiteren Ausführungsform des Sicherheitsmoduls umfasst das Sicherheitsmodul eine Abfrageschnittstelle, wobei der Programmcode über die Abfrageschnittstelle eine Konfiguration des Prozessors abfragt und wobei der Programmcode eine Ausführung erlaubt, wenn die Konfiguration mit den Ausführungsanforderungen kompatibel ist.

Das Sicherheitsmodul ist dahingehend vorteilhaft, damit der Programmcode überprüfen kann, ob das Sicherheitsmodul dazu geeignet ist den Programmcode auszuführen. Stellt der Programmcode z. B. fest, dass das Sicherheitsmodul bzw. der konfigurierbare Prozessor nicht die Ausführungsanforderungen erfüllt, so beendet der Programmcode vorzugsweise selbständig seine Ausführung. Dies erlaubt insbesondere Know-How zu schützen, das bei einer Ausführung des Programmcodes in einer ungeschützten Ausführungsumgebung (z. B. eine Ausführungsumgebung, die die Ausführungsanforderungen nicht erfüllt) für Unbefugte leicht zugänglich wäre.

Bei einer weiteren Ausführungsform des Sicherheitsmoduls sind Konfigurationsdaten für das Konfigurieren auf einem sicherheitsmodulexternen Speicher gespeichert, wobei die Konfigurationsdaten vorzugsweise schreibgeschützt sind und wobei die Konfigurationsdaten vorzugsweise kryptographisch geschützt sind.

Das Sicherheitsmodul ist dahingehend vorteilhaft, um insbesondere die Konfigurationsdaten leicht zu speichern oder diese auf unkomplizierte Weise auszutauschen. Diese Konfigurationsdaten sind vorzugsweise kryptographisch geschützt. Dies kann beispielsweise durch eine Verschlüsselung der Konfigurationsdaten, mittels Prüfsummen oder mittels einer digitalen Signatur erfolgen. Das Sicherheitsmodul verfügt insbesondere über die entsprechenden kryptographischen Schlüssel, um einen kryptographischen Schutz aufzuheben oder zu überprüfen. Diese Daten können beispielsweise in einem geschützten Speicher des Sicherheitsmoduls angelegt sein, den z. B. ausschließlich das Sicherheitsmodul auslesen kann und wodurch insbesondere lesende externe Zugriffe von außerhalb des Sicherheitsmoduls unterbunden werden. Der Speicher selbst kann beispielsweise nur mit neuen kryptographischen Schlüsseln beschrieben werden, wenn hierfür z. B. ein Administratorpasswort bereitgestellt wurde. Ein Austausch der Konfigurationsdaten beispielsweise von einem ersten Sicherheitsmodul zu einem zweiten Sicherheitsmodul ist beispielsweise bei einem Gerätetausch, z. B. eines Steuergerätes eines Automatisierungssystems, vorteilhaft. Nach dem Transfer steht beispielsweise das Sicherheitsmodul auf dem Ersatzgerät zur Verfügung, sodass das Ersatzgerät nahtlos, ohne aufwendigen Konfigurationsaufwand, in Betrieb genommen werden kann.

Bei einer weiteren Ausführungsform des Sicherheitsmoduls verarbeitet die erste Schnittstelle vorgegebene Befehle, wobei die erste Schnittstelle vorzugsweise eine Kommunikationsverbindung mit einem Hauptprozessor ist.

Das Sicherheitsmodul ist dahingehend vorteilhaft, um insbesondere den Programmcode von einem Hauptprozessor zu empfangen, sodass das Sicherheitsmodul diesen Programmcode ausführen kann.

Bei einer weiteren Ausführungsform des Sicherheitsmoduls umfasst das Sicherheitsmodul einen Sicherheitsanker, welches mittels einer Ableitungsfunktion (z. B. HMAC-SHA256) erste kryptographische Schlüssel bereitstellt, wobei der Sicherheitsanker beispielsweise durch den konfigurierbaren Prozessor realisiert ist oder der Sicherheitsanker beispielsweise intern im Sicherheitsmodul angeordnet ist, jedoch extern von dem konfigurierbaren Prozessor.

Das Sicherheitsmodul ist dahingehend vorteilhaft, um einen sicheren Zufallsgenerator oder Schlüsselgenerator bereitzustellen, der z. B. durch den Programmcode beim Ausführen genutzt werden kann, indem z. B. die ersten kryptographischen Schlüssel bereitgestellt werden. Alternativ oder zusätzlich kann z. B. ein kryptographischer Schutz des Programmcodes überprüft oder aufgehoben werden, bevor dieser durch das Sicherheitsmodul ausgeführt wird. Dies kann z. B. eine Verschlüsselung des Programmcodes sein oder ein Überprüfen der digitalen Signatur. Hierzu können z. B. ebenfalls die ersten kryptographischen Schlüssel genutzt werden. Die Ableitungsfunktion kann beispielsweise auch den Sicherheitsanker verwenden, um die ersten kryptographischen Schlüssel bereitzustellen.

Bei einer weiteren Ausführungsform des Sicherheitsmoduls umfasst das Sicherheitsmodul einen Schlüsselspeicher für zweite kryptographische Schlüssel, wobei der Schlüsselspeicher beispielsweise durch den konfigurierbaren Prozessor realisiert ist oder der Schlüsselspeicher beispielsweise intern im Sicherheitsmodul angeordnet ist, jedoch extern von dem konfigurierbaren Prozessor.

Das Sicherheitsmodul ist dahingehend vorteilhaft, um die zweiten kryptographischen Schlüssel sicher für eine Verwendung zu speichern. Beispielsweise kann der Programmcode diese beim Ausführen nutzen. Alternativ oder zusätzlich kann anhand der zweiten kryptographischen Schlüssel z. B. ein kryptographischer Schutz des Programmcodes überprüft oder aufgehoben werden, bevor der Programmcode durch das Sicherheitsmodul ausgeführt wird. Dies kann z. B. eine Verschlüsselung des Programmcodes sein oder ein Überprüfen der digitalen Signatur.

Bei einer weiteren Ausführungsform des Sicherheitsmoduls umfasst das Sicherheitsmodul ein Manipulationserkennungsmodul, wobei das Manipulationserkennungsmodul beispielsweise durch den konfigurierbaren Prozessor realisiert ist oder das Manipulationserkennungsmodul beispielsweise intern im Sicherheitsmodul angeordnet ist, jedoch extern von dem konfigurierbaren Prozessor.

Das Sicherheitsmodul ist dahingehend vorteilhaft, um eine Manipulation des Sicherheitsmoduls zu erkennen. Wird z. B. eine Manipulation erkannt, kann das Sicherheitsmodul in einen sicheren Zustand versetzt werden, bei dem z. B. die Ausführung des Programmcodes unterbrochen wird. Auch kann beim Erkennen einer physikalischen Manipulation eine fest definierte Tamper-Respondence-Funktion ausgeführt werden (z. B. Löschen von gespeicherten kryptographischen Schlüsseln, d. h. Zeroization). Das Manipulationserkennungsmodul kann als Tamper-Sensor (z. B. Bohrschutzfolie / wire mesh, Helligkeitssensor, Temperatursensor, Strahlungssensor, Spannungssensor, Taktüberwachung) realisiert sein. Fehlerangriffe, bei welchem beispielsweise ein Angreifer bewusst Fehler in Berechnungen des Programmcodes einbringt um an sicherheitskritische Daten zu gelangen, können insbesondere durch mehrere einzelne selbst erstelle Module, verteilt auf dem FPGA, erkannt werden. Diese Module berechnen beispielsweise einfache Testberechnungen, wie z. B. Zähler, und prüfen diese auf Konsistenz. Bei einem Fehlerangriff schlägt beispielsweise die Überprüfung fehl und eine Tamper-Respondance-Funktion kann ausgeführt werden (z. B. Löschen von gespeicherten kryptographischen Schlüsseln, d. h. Zeroization).

Bei einer weiteren Ausführungsform des Sicherheitsmoduls umfasst das Sicherheitsmodul mehrere weitere konfigurierbare Prozessoren, wobei die mehreren weiteren konfigurierbaren Prozessoren analog zum konfigurierbaren Prozessor realisiert sind.

Das Sicherheitsmodul ist dahingehend vorteilhaft, um beispielsweise auf mehreren Sicherheitsmodulen oder konfigurierbaren Prozessoren mehrere Programmcodes parallel auszuführen.

Gemäß einem weiteren Aspekt betrifft die Erfindung ein Verfahren zum rechnergestützten Ausführen eines Programmcodes mittels eines Sicherheitsmoduls mit folgenden Verfahrensschritten:
- Empfangen von dem Programmcode über eine erste Schnittstelle, wobei
   - dem Programmcode Ausführungsanforderungen zugeordnet sind;
- Ausführen des Programmcodes mittels eines konfigurierbaren Prozessors, wobei
   - eine Ausführungseinheit anhand der Ausführungsanforderungen überprüft, ob der Programmcode durch den konfigurierbaren Prozessor ausgeführt werden darf,
   - die Ausführungseinheit abhängig vom einem Ergebnis des Prüfens den Programmcode anhand der Ausführungsanforderungen mittels eines auf einer Speichereinheit gespeicherten Ausführungsumgebung ausführt;
- zur Generierung eines Gesamtschlüssels dem Eingabesicherheitsmodul ein Initialisierungsparameter als der Eingabeparameter übermittelt wird oder das Eingabesicherheitsmodul einen Initialisierungsparameter als einen ersten Teilschlüssel bereitstellt,
   - jeweils der berechnete Teilschlüssel des jeweiligen Sicherheitsmoduls als Eingabeparameter des darauffolgenden Sicherheitsmoduls übermittelt wird,
- Bereitstellen des letzten Teilschlüssels eines letzten Sicherheitsmoduls der seriell kommunikativ verbundenen Sicherheitsmodule als Gesamtschlüssel.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) des Sicherheitsmoduls analog nachzubilden.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das erfindungsgemäße Sicherheitsmodul erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Sicherheitsmodul erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein zweites Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

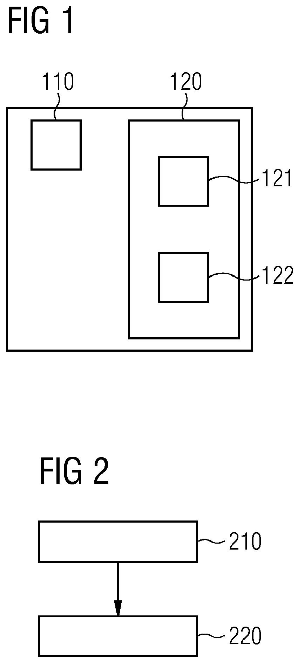

Die Fig. 1 zeigt ein erstes Ausführungsbeispiel der Erfindung. Im Einzelnen ist dabei ein Sicherheitsmodul gezeigt.

Im Einzelnen zeigt die Fig. 1 ein Sicherheitsmodul umfassend eine erste Schnittstelle 110, eine erste Speichereinheit 121 und einen ersten konfigurierbaren Prozessor 120.

Die erste Schnittstelle 110 ist zum Empfangen von einem Programmcode eingerichtet, wobei dem Programmcode Ausführungsanforderungen zugeordnet sind.

Die erste Speichereinheit 121 ist zum Speichern einer Ausführungsumgebung, z. B. einem Betriebssystem, eingerichtet. Die erste Speichereinheit kann beispielsweise auch von dem konfigurierbaren Prozessor selbst realisiert werden oder ist extern von dem konfigurierbaren Prozessor angeordnet.

Der konfigurierbare Prozessor 120 ist zur Ausführung des Programmcodes eingerichtet. Hierzu umfasst der konfigurierbare Prozessor 120 eine Ausführungseinheit 122.

Die Ausführungseinheit 122 ist zum Ausführen des Programmcode anhand der Ausführungsanforderungen mittels des Betriebssystems eingerichtet. Die Ausführungsanforderungen legen hierbei fest, ob der Programmcode durch den konfigurierbaren Prozessor ausgeführt werden darf.

Mit anderen Worten kann mit der Erfindung ein Sicherheitsmodul, speziell eines open Hardware Security Moduls, realisiert werden. Das Sicherheitsmodul wird mittels des konfigurierbaren Prozessors 120 realisiert.

Das Sicherheitsmodul ermöglicht z. B. einem Anwender, schutzbedürftigen Programmcode in einer geschützten Ausführungsumgebung auszuführen bzw. sicherheitskritische Daten in einer geschützten Ausführungsumgebung zu bearbeiten.
Insbesondere kann ein Security-Container, der z. B. eine Funktionalität des Sicherheitsmoduls realisiert (z. B. ein Bereitstellen eines kryptographischen Schlüssels oder ein Entschlüsseln von Daten), dadurch dem Sicherheitsmodul separat von einer Applikations-CPU/Hauptprozessor aufgesetzt werden. Unter einem Security-Container ist hierbei insbesondere der Programmcode zu verstehen, dem die Ausführungsanforderungen zugeordnet sind.

Die Ausführungsanforderungen geben z. B. an, dass dieser Programmcode nur auf einem vorgegebenen Typ von konfigurierbaren Prozessor, z. B. FPGA-basierten Soft-CPU, ausgeführt werden darf, nicht jedoch in einer normalen Programm-Laufzeitumgebung auf der Applikations-CPU.

Für die Realisierung des Sicherheitsmoduls wird auf dem konfigurierbaren Prozessor ein Betriebssystem, beispielsweise Linux, ausgeführt. Auf Basis dieses Betriebssystems wird z. B. die Funktionalität des Sicherheitsmoduls umgesetzt. Dem Anwender wird ermöglicht, eigenen Programmcode einer Applikation oder eine ganze Applikation, beispielsweise in Form von Linux Containern, zu erstellen und auf das Sicherheitsmodul zu laden. Dort kann die Applikation in einer sicheren Umgebung ausgeführt werden. Der Anwender kann beispielsweise beim Erstellen oder vor dem Laden die Ausführungsanforderungen zuweisen.

In einer Variante wird zum Starten/Ausführen von Programmcode oder eines Containers (z. B. einem Linux-Container (z.B. Docker, runc)) eine für diesen Programmcode exklusiv zur Verfügung stehender konfigurierbarer Prozessor verwendet.

In einer weiteren Variante wird beim Starten/Ausführen des Programmcodes oder Containers der konfigurierbare Prozessor auf dem FPGA neu eingerichtet, z. B. über Partial Reconfiguration (partielle Neukonfiguration), und der Container oder der Programmcode auf diesem konfigurierbaren Prozessor gestartet.

In einer weiteren Variante wird beim Starten/Ausführen eines Containers oder Programmcodes der FPGA neu geladen (Reset, Einlesen des Bitstreams in den FPGA) - sprich neu konfiguriert, was auch als ein Zurücksetzen in einen vorgegebenen Zustand bezeichnet werden kann. Dies hat den Vorteil, dass auf dem FPGA beim Start eines Containers eine definierte Ausführungsumgebung mittels der Ausführungseinheit vorliegt.

In einer weiteren Variante wird beim Beenden des Containers oder Programmcodes der FPGA vorzugsweise gelöscht (Reset, Zeroize). Dadurch ist mit hoher Verlässlichkeit gewährleistet, dass keine Rest-Daten des ausgeführten Containers mehr vorliegen.

Die Erfindung ist dahingehend vorteilhaft, dass der Container oder Programmcode in einer Hardware-basiert separierten, und Hardware-basiert integritätsgeschützten Ausführungsumgebung (die auch als Ausführungseinheit bzw. konfigurierbarer Prozessor bezeichnet werden kann) ausgeführt wird. Ein Container oder Programmcode wird dadurch in einer Ausführungsumgebung ausgeführt, die mit hoher Verlässlichkeit nicht manipuliert ist.

Der konfigurierbare Prozessor kann beispielsweise so gestaltet sein, dass der über ein fest definiertes Interface (z. B. die erste Schnittstelle) mit dem Anwender (Haupt-CPU) verbunden ist. Beispielsweise ist die Verbindung als serielle Schnittstelle, z. B. RS232, SPI oder I2C realisiert, wobei das Sicherheitsmodul nur fest definierte Kommandos oder einen vorgegebenen Befehlssatz/Kommandos verarbeitet.

Die erste Schnittstelle wird auch dazu verwendet, Applikationen auf das Sicherheitsmodul zu laden. Eine Netzwerkschnittelle zum konfigurierbaren Prozessor ist vorzugsweise nicht vorgesehen.

Ebenfalls sind vorzugsweise keine Zugriffsmöglichkeiten durch andere (FPGA) Module auf das Sicherheitsmodul vorgesehen.

In einer weiteren Variante ist das Sicherheitsmodul mittels eines System-on-Chip (SoC) realisiert. Ein System-on-Chip vereint eine CPU oder Hauptprozessor und einen FPGA auf einem Chip. Auf der Hard-CPU (Hauptprozessor) befindet sich das Betriebssystem, z. B. Linux, des Anwenders. Die Implementierung der Soft-CPU wird auf der programmierbaren Logik des FPGAs realisiert. Genauso wie bereits erläutert, wird der konfigurierbare Prozessor so konfiguriert, dass ein Betriebssystem, z. B. Linux, aufgesetzt bzw. ausgeführt werden kann.

Dies ermöglicht insbesondere eine vollständige Realisierung eines Sicherheitsmoduls, auf welchem der Nutzer seine Container-basierten Applikationen bzw. seinen Programmcode aufspielen kann. Für die erste Schnittstelle ist auch hier ein Befehlssatz/Kommandos fest vorgegebenen bzw. definiert. Da bei einem SoC die Verbindung der Hard-CPU mit der Soft-CPU chipintern ist, wird verhindert, dass die erste Schnittstelle durch Abhören leicht angreifbar ist. Weiterhin ist die Performanz (engl. Performance) für die erste Schnittstelle verbessert als bei einem extern angeschlossenen Sicherheitsmodul. Beispielsweise, wenn das Sicherheitsmodul über eine RS232 Schnittstelle mit dem Hauptprozessor kommuniziert.

Die Daten (z. B. die Konfigurationsdaten) zur Konfiguration eines beispielsweise SRAM basierten FPGAs (die kann auch als Bitstream bezeichnet werden), befinden sich dabei in einem proprietären Format auf einen externem Speicher (sicherheitsmodulexternen Speicher). Flash basierte FPGAs (z.B. Microsemi FPGAs) können beispielsweise auf einen externen Speicher für den Bitstream verzichten, da diese ihre Konfiguration nichtflüchtig im FPGA abspeichern können. Folglich kann für ein derartiges Sicherheitsmodul der Bitstream im FPGA gespeichert werden.

Die Konfigurationsdaten sind vorzugsweise verschlüsselt abgespeichert. Beim Systemstart werden z. B. die Konfigurationsdaten entschlüsselt und die Authentizität überprüft, bevor der konfigurierbare Prozessor konfiguriert wird.

In einer weiteren Variante wird die Integrität benötigter Software für einen konfigurierbaren Prozessor, z. B. Bootloader und Betriebssystem, durch ein geeignetes Modul (z. B. ein Überprüfungsmodul insbesondere ein FPGA-Überprüfungsmodul) überprüft. Diese Lösung wird vorzugsweise verwendet, um die Ausführungsumgebung bzw. Ausführungseinheit (z. B. Betriebssystem und Bootloader) und den darauf ausgeführten Container/Programmcode manipulationsgeschützt zu starten. Die Software für die Ausführungsumgebung bzw. Ausführungseinheit befindet sich z. B. auf einem sicherheitsmodulexternen Speicher, z. B. in einem Flash Speicher. Diese Erweiterung ermöglicht es, die Integrität dieser Software des Sicherheitsmoduls zu überprüfen und nur bei erfolgreicher Überprüfung zu laden.

In einer weiteren Variante des Sicherheitsmoduls verwendet dieses einen Sicherheitsanker, der geheime Schlüssel (z. B. der erste kryptographische Schlüssel) verwendet bzw. zur Verfügung stellt. Der Sicherheitsanker kann FPGA-basiert sein, z. B. als Physical Unclonable Functions (PUFs) realisiert sein. Der Sicherheitsanker kann an das Sicherheitsmodul angebunden sein, nur durch dieses benutzt werden oder vom Sicherheitsmodul umfasst sein. Der konfigurierbare Prozessor kann den Sicherheitsanker beispielsweise auch umfassen.

Auch können beispielsweise die Konfigurationsdaten für den konfigurierbaren Prozessor durch solch einen Schlüssel verschlüsselt extern abgelegt werden. Beim Laden der Konfigurationsdaten kann diese, z. B. durch ein im FPGA Modul, Sicherheitsmodul oder konfigurierbaren Prozessor integrierten Kryptoalgorithmus (z.B. AES-GCM), entschlüsselt werden.

Weiterhin kann ein Container/Programmcode, der auf dem konfigurierbaren Prozessor ausgeführt werden soll, mit einem Hardware-spezifischen Schlüssel verschlüsselt sein, der nur innerhalb des Sicherheitsmoduls oder des konfigurierbaren Prozessors vorliegt.

Dadurch kann mit hoher Verlässlichkeit gewährleistet werden, dass der Container/Programmcode nur in der erfindungsgemäßen Hardware-basiert geschützten Ausführungsumgebung entschlüsselt und ausgeführt werden kann.

In einer weiteren Variante umfasst das Sicherheitsmodul und/oder der konfigurierbare Prozessor ein Manipulationserkennungsmodul. Mittels des Manipulationserkennungsmoduls können Tamperangriffen erkannt werden. Das Manipulationserkennungsmodul lässt sich durch den oder einen konfigurierbaren Prozessor (z. B. als FPGA-Module) realisieren.

Beispielsweise können Testberechnungen verteilt über das Sicherheitsmodul und/oder den konfigurierbaren Prozessor durchgeführt werden, die bei Tamperangriffen fehlschlagen und entsprechend dem Sicherheitsmodul mitgeteilt werden. Dieses reagiert z. B. durch das Löschen von kryptographischen Schlüsseln (Zeroization) oder durch das Zurücksetzen des Sicherheitsmoduls in den Ausgangszustand.

Es ist auch möglich, mehrere konfigurierbare Prozessoren und dementsprechend mehrere Sicherheitsmodule auf einem FPGA zu implementieren. Dies ermöglicht es, mehrere Security-Container auf einem FPGA zu realisieren. Der konfigurierbare Prozessor wird dadurch in mehrere logische konfigurierbare Prozessoren unterteilt, die jeweils vorzugsweise ein eigenes Sicherheitsmodul mit entsprechenden Merkmalen realisieren.

Die Erfindung betrifft somit insbesondere ein Sicherheitsmodul, das eine geschützte Ausführungsumgebung bereitstellt, um Programmcode möglichst sicher auszuführen. Das Sicherheitsmodul ist vorzugsweise individuell für seinen Einsetzzweck konfigurierbar. Dies erfolgt z. B. anhand der Ausführungsanforderungen.

Die Fig. 2 zeigt ein zweites Ausführungsbeispiel der Erfindung.

Im Einzelnen zeigt die Fig. 2 ein Ablaufdiagramm der Erfindung, wobei die Erfindung durch ein rechnergestütztes Verfahren implementiert wird.

Das Verfahren ist vorzugsweise rechnergestützt realisiert. Im Einzelnen wird in diesem Ausführungsbeispiel ein Verfahren zum rechnergestützten Ausführen eines Programmcodes mittels eines Sicherheitsmoduls.

Das Verfahren umfasst einen ersten Verfahrensschritt 210 zum Empfangen von dem Programmcode über eine erste Schnittstelle, wobei dem Programmcode Ausführungsanforderungen zugeordnet sind.

Das Verfahren umfasst einen zweiten Verfahrensschritt 220 zum Ausführen des Programmcodes mittels eines konfigurierbaren Prozessors, wobei eine Ausführungseinheit anhand der Ausführungsanforderungen überprüft, ob der Programmcode durch den konfigurierbaren Prozessor ausgeführt werden darf.

Die Ausführungseinheit führt abhängig von einem Ergebnis des Prüfens den Programmcode anhand der Ausführungsanforderungen mittels eines auf einer Speichereinheit gespeicherten Ausführungsumgebung aus.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Sicherheitsmodul aufweisend:
- eine erste Schnittstelle zum Empfangen von einem Programmcode wobei,
- dem Programmcode Ausführungsanforderungen zugeordnet sind;
- eine erste Speichereinheit mit einer Ausführungsumgebung;
- einen konfigurierbaren Prozessor zur Ausführung des Programmcodes umfassend,
- eine Ausführungseinheit, wobei
- die Ausführungsanforderungen festlegen, ob der Programmcode durch den konfigurierbaren Prozessor ausgeführt werden darf,
- die Ausführungseinheit den Programmcode anhand der Ausführungsanforderungen mittels der Ausführungsumgebung ausführt
wobei der konfigurierbare Prozessor insbesondere ein FPGA ist.

2. Sicherheitsmodul nach Anspruch 1, wobei
- das Sicherheitsmodul eine Konfigurationseinheit zum Konfigurieren des konfigurierbaren Prozessors umfasst,
- die Konfigurationseinheit insbesondere den konfigurierbaren Prozessor anhand der Ausführungsanforderungen konfiguriert,
- die Konfigurationseinheit insbesondere den konfigurierbaren Prozessor anhand der Ausführungsanforderungen individuell für den Programmcode konfiguriert.

3. Sicherheitsmodul nach Anspruch 2, wobei
- die Konfigurationseinheit den konfigurierbaren Prozessor nach erfolgreicher Authentifizierung konfiguriert.

4. Sicherheitsmodul nach einem der vorhergehenden Ansprüche, wobei die Ausführungseinheit anhand der Ausführungsanforderungen überprüft, ob der Programmcode ausgeführt wird.

5. Sicherheitsmodul nach einem der vorhergehenden Ansprüche, wobei
- das Sicherheitsmodul eine Abfrageschnittstelle umfasst,
- der Programmcode über die Abfrageschnittstelle eine Konfiguration des Prozessors abfragt,
- der Programmcode eine Ausführung erlaubt, wenn die Konfiguration mit den Ausführungsanforderungen kompatibel ist.

6. Sicherheitsmodul nach einem der Ansprüche 2 bis 4, wobei
- Konfigurationsdaten für das Konfigurieren auf einem sicherheitsmodulexternen Speicher oder auf einem internen Speicher des Sicherheitsmoduls gespeichert sind,
- die Konfigurationsdaten vorzugsweise schreibgeschützt sind,
- die Konfigurationsdaten vorzugsweise kryptographisch geschützt sind.

7. Sicherheitsmodul nach einem der vorhergehenden Ansprüche, wobei
- die erste Schnittstelle vorgegebene Befehle verarbeitet,
- die erste Schnittstelle vorzugsweise eine Kommunikationsverbindung mit einem Hauptprozessor ist.

8. Sicherheitsmodul nach einem der vorhergehenden Ansprüche, wobei
- das Sicherheitsmodul einen Sicherheitsanker umfasst,
- mittels einer Ableitungsfunktion erste kryptographische Schlüssel bereit gestellt werden,
- der Sicherheitsanker beispielsweise durch den konfigurierbaren Prozessor realisiert ist, oder
- der Sicherheitsanker beispielsweise intern im Sicherheitsmodul angeordnet ist, jedoch extern von dem konfigurierbaren Prozessor.

9. Sicherheitsmodul nach einem der vorhergehenden Ansprüche, wobei
- das Sicherheitsmodul einen Schlüsselspeicher für zweite kryptographische Schlüssel umfasst,
- der Schlüsselspeicher beispielsweise durch den konfigurierbaren Prozessor realisiert ist, oder
- der Schlüsselspeicher beispielsweise intern im Sicherheitsmodul angeordnet ist, jedoch extern von dem konfigurierbarer Prozessor.

10. Sicherheitsmodul nach einem der vorhergehenden Ansprüche, wobei
- das Sicherheitsmodul ein Manipulationserkennungsmodul umfasst,
- das Manipulationserkennungsmodul beispielsweise durch den konfigurierbaren Prozessor realisiert ist, oder
- das Manipulationserkennungsmodul beispielsweise intern im Sicherheitsmodul angeordnet ist, jedoch extern von dem konfigurierbaren Prozessor.

11. Sicherheitsmodul nach einem der vorhergehenden Ansprüche, wobei
- das Sicherheitsmodul mehrere weitere konfigurierbare Prozessoren umfasst,
- die mehreren weiteren konfigurierbaren Prozessoren analog zum konfigurierbaren Prozessor realisiert sind.

12. Verfahren zum rechnergestützten Ausführen eines Programmcodes mittels eines Sicherheitsmoduls mit folgenden Verfahrensschritten:
- Empfangen von dem Programmcode über eine erste Schnittstelle, wobei
- dem Programmcode Ausführungsanforderungen zugeordnet sind;
- Ausführen des Programmcodes mittels eines konfigurierbaren Prozessors, wobei
- eine Ausführungseinheit anhand der Ausführungsanforderungen überprüft, ob der Programmcode durch den konfigurierbaren Prozessor ausgeführt werden darf,
- die Ausführungseinheit abhängig von einem Ergebnis des Prüfens den Programmcode anhand der Ausführungsanforderungen mittels eines auf einer Speichereinheit gespeicherten Ausführungsumgebung ausführt.

13. Computerprogrammprodukt mit Programmbefehlen zur Durchführung des Verfahrens nach Anspruch 12.

14. Computerprogrammprodukt mit Programmbefehlen für ein Erstellungsgerät, das mittels der Programmbefehle konfiguriert wird, um das Sicherheitsmodul nach einem der Ansprüche 1-11 zu erstellen.

15. Bereitstellungsvorrichtung für das Computerprogrammprodukt nach Anspruch 13 und/oder 14, wobei die Bereitstellungsvorrichtung das Computerprogrammprodukt speichert und/oder bereitstellt.
